# EUROPEAN PATENT APPLICATION

(11) **EP 4 502 295 A1**
(43) Date of publication of application: **05.02.2025**
(21) Application number: 23779648.7
(22) Date of filing: 15.03.2023
(51) Int. Cl.: E02F 9/20, E02F 9/26

(54) **WORK MACHINE AND COMPONENT MANAGEMENT SYSTEM**

(30) Priority: 31.03.2022 JP 2022060779
(71) Applicant: Hitachi Construction Machinery Co., Ltd., Tokyo 110-0015 (JP)
(72) Inventor: AKITA Hideki, Tsuchiura-shi, Ibaraki 300-0013 (JP); TOYODA Haruo, Tsuchiura-shi, Ibaraki 300-0013 (JP); HAMAMACHI Yoshiya, Tsuchiura-shi, Ibaraki 300-0013 (JP); IITSUKA Kenji, Tsuchiura-shi, Ibaraki 300-0013 (JP); TOMINAGA Tetsuyoshi, Tsuchiura-shi, Ibaraki 300-0013 (JP); AZAMI Takashi, Tsuchiura-shi, Ibaraki 300-0013 (JP); MATSUO Kento, Tsuchiura-shi, Ibaraki 300-0013 (JP); HAYASHI Kazuyo, Tsuchiura-shi, Ibaraki 300-0013 (JP)
(74) Representative: MERH-IP Matias Erny Reichl Hoffmann Patentanwälte PartG mbB
(86) International application number: PCT/JP2023/010199
(87) International publication number: WO 2023/189630

(57) **Abstract**

A work machine includes a machine body, a work device attached to the machine body, a monitoring device that is attached to the machine body and monitors the surroundings of the machine body or the inside of the machine body, a storage device in which identification information of the machine body is stored, a controller that controls the monitoring device, and a communication device that executes communication with the external. The controller determines whether or not identification information of a part to be attached to the machine body or the work device is included in monitoring information acquired by the monitoring device, and associates the identification information of the part with the identification information of the machine body, the identification information of the machine body being stored in the storage device, and transmits the identification information of the part and the identification information of the machine body to the external by the communication device when the identification information of the part is included in the monitoring information.

## Description

### Technical Field

The present invention relates to a parts management system that manages parts attached to a work machine and a work machine.

### Background Art

A parts management system that manages parts such as an oil filter mounted in a work machine such as a hydraulic excavator is known (refer to patent document 1). Disclosed in patent document 1 is a parts management method in which part identification data to identify a part to be mounted in a work machine and machine identification data to identify the work machine are acquired through an information terminal such as a smartphone and whether or not the part is in a proper state is determined on the basis of the result of collation between the part identification data and part registration data and the result of collation between position data of the information terminal and position data of the work machine.

### Prior Art Document

### Patent Document

Patent Document 1: JP-2020-16129-A

### Summary of the Invention

### Problem to be Solved by the Invention

In the technique described in patent document 1, a worker needs to prepare the information terminal and read the part identification information by using the information terminal, and furthermore read the machine identification information of the work machine by using the information terminal. Thus, labor and time are required for work for associating the identification information of the work machine with the identification information of the part.

The present invention intends to provide a parts management system that can easily execute work for associating identification information of a work machine with identification information of a part.

### Means for Solving the Problem

A work machine according to one aspect of the present invention includes a machine body, a work device attached to the machine body, a monitoring device that is attached to the machine body and monitors surroundings of the machine body or the inside of the machine body, a storage device in which identification information of the machine body is stored, a controller that controls the monitoring device, and a communication device that executes communication with the external. The controller is configured to determine whether or not identification information of a part to be attached to the machine body or the work device is included in monitoring information acquired by the monitoring device, and associate the identification information of the part with the identification information of the machine body, the identification information of the machine body being stored in the storage device, and transmit the identification information of the part and the identification information of the machine body to the external by the communication device when the identification information of the part is included in the monitoring information.

### Advantages of the Invention

According to the present invention, it is possible to provide a work machine and a parts management system that can easily execute work for associating the identification information of the work machine and the identification information of the part.

### Brief Description of the Drawings

FIG. 1 is a diagram illustrating the configuration of a parts management system according to a first embodiment.
FIG. 2 is a diagram illustrating one example of a control system of a work machine.
FIG. 3A is a hardware configuration diagram of an information controller.
FIG. 3B is a hardware configuration diagram of a management server.
FIG. 4 is a functional block diagram of the information controller and the management server.
FIG. 5 is a diagram illustrating a packaged part and a label including identification information given to the part.
FIG. 6 is a diagram illustrating a management table.
FIG. 7 is a flowchart illustrating the flow of processing executed by the information controller in replacement work of the part.
FIG. 8 explains the flow of processing executed by the management server in replacement work of the part.
FIG. 9 is a flowchart illustrating processing for notifying an operator or the like of a planned date of maintenance of the part, executed by the management server.
FIG. 10 is a diagram illustrating a monitoring device of a work machine according to a second embodiment.
FIG. 11 explains the flow of processing executed by the management server in replacement work of the part in the parts management system according to modification example 2.
FIG. 12 explains the flow of processing executed by the management server in replacement work of the part in the parts management system according to modification example 3.

### Modes for Carrying Out the Invention

A work machine and a management system of parts attached to a work machine according to embodiments of the present invention will be described with reference to the drawings. What has the same function is given the same numeral unless otherwise noted in all diagrams for explaining the present embodiments and repetitive explanation thereof is omitted in some cases. The work machine is a machine used for various kinds of work, such as civil engineering work, construction work, and demolition work. In the present embodiments, an example in which the work machine is a crawler type hydraulic excavator will be described.

### <First Embodiment>

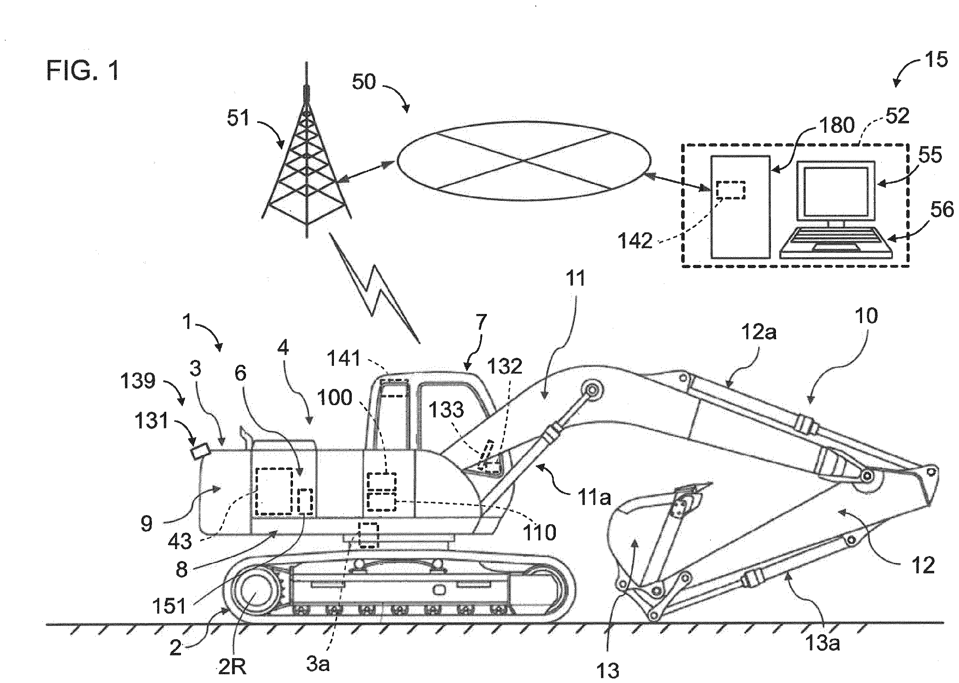

FIG. 1 is a diagram illustrating the configuration of a parts management system 15 according to a first embodiment of the present invention. The parts management system 15 is a system that manages parts 151 attached to a work machine 1. In the present embodiment, the parts 151 that become management targets are replacement parts (parts for service) replaced at a predetermined timing and are, for example, a hydraulic operating fluid filter, an engine oil filter, a fuel filter, and an air filter of an engine and oils such as a hydraulic operating fluid and an engine oil.

As illustrated in FIG. 1, the parts management system 15 has an information controller 110 mounted in the work machine 1 that executes work at a work site, a monitoring device 139 mounted on the work machine 1, and a management server 180 installed at a management center 52. For example, the management center 52 is installed at a facility such as a head office, branch office, or factory of the manufacturer of the work machine 1, a rental company of the work machine 1, a data center that professionally operates servers, a facility of the owner that owns the work machine 1, or the like. The management server 180 is disposed at a place separate from the work machine 1, that is, at the external of the work machine 1. The management server 180 remotely manages the state of the work machine 1.

The work machine 1 that executes work at a work site and the management server 180 installed at a place separate from the work site execute bidirectional communication through a communication line 50 of a wide-area network. That is, the work machine 1 and the management server 180 execute transmission and reception of information (data) through the communication line 50. The communication line 50 is a mobile phone communication network (mobile communication network) developed by a mobile phone carrier or the like, the Internet, or the like. For example, as illustrated the diagram, in a case in the work machine 1 and a radio base station 51 are connected by a mobile phone communication network (mobile communication network), the radio base station 51 transmits received information to the management server 180 through the Internet when receiving the predetermined information from the work machine 1.

The management server 180 acquires information from the work machine 1 through a communication device 142 and stores it. The communication device 142 is an NIC (Network Interface Card) that has a communication circuit and executes communication with the work machine 1 through the communication line 50. The management server 180 controls a display device 55 such as a liquid crystal display device and causes a display screen of the display device 55 to display a predetermined image. A manager can grasp of the state of the work machine 1 by operating the management server 180 by an input device 56 such as keyboard and mouse and causing the display device 55 to display information on the predetermined work machine 1.

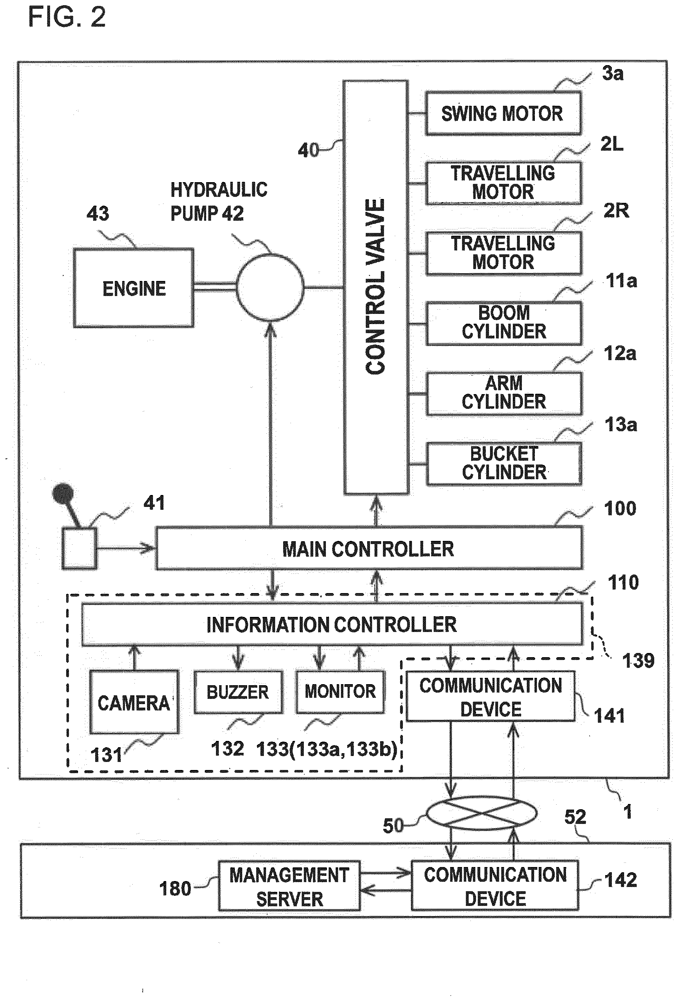

The work machine 1 includes a machine body 4 and a work device 10 attached to the machine body 4. The machine body 4 includes a track structure 2 and a swing structure 3 swingably disposed on the track structure 2, and the work device 10 is attached to a front part of the swing structure 3. The track structure 2 includes a travelling motor 2L (see FIG. 2) that drives a left crawler and a travelling motor 2R that drives a right crawler. The track structure 2 travels by driving the pair of left and right crawlers by the travelling motors 2L and 2R. The swing structure 3 swings by driving a swing motor 3a disposed in the machine body 4.

The swing structure 3 has a swing frame 8, a cab 7 disposed on the left side of a front part of the swing frame 8, a counterweight 9 disposed at a rear part of the swing frame 8, and an engine chamber 6 disposed on the rear side of the cab 7 in the swing frame 8. Housed in the engine chamber 6 are an engine 43 that is a prime mover and pieces of hydraulic equipment such as a hydraulic pump driven by the engine 43. The work device 10 is pivotally joined to the center of the front part of the swing frame 8.

The work device 10 is an articulated work device having a plurality of hydraulic cylinders and a plurality of driving target members driven by the plurality of hydraulic cylinders. In the present embodiment, a boom 11, an arm 12, and a bucket 13 are joined in series as three driving target members. A base end part of the boom 11 is pivotally joined to the front part of the swing frame 8. A base end part of the arm 12 is pivotally joined to a tip part of the boom 11. The bucket 13 is pivotally joined to a tip part of the arm 12.

The boom 11 is driven by a boom cylinder (hydraulic cylinder) 11a and pivots relative to the swing frame 8. The arm 12 is driven by an arm cylinder (hydraulic cylinder) 12a and pivots relative to the boom 11. The bucket 13 is driven by a bucket cylinder (hydraulic cylinder) 13a and pivots relative to the arm 12. Work such as excavation of the ground or leveling of the ground is executed through driving of the respective hydraulic cylinders of the work device 10.

The monitoring device 139 is attached to the machine body 4 and monitors the surroundings of the machine body 4. The monitoring device 139 includes a camera 131 as an external recognition sensor that acquires information on an object around the machine body 4. The camera 131 is attached to the swing structure 3 and shoots the surroundings of the work machine 1. The monitoring device 139 monitors the inside of a monitoring range (that is, range of shooting by the camera 131) on the basis of image data arising from shooting by the camera 131.

As illustrated in FIG. 1, in the present embodiment, the camera 131 that executes shooting in the rear direction of the swing structure 3 is attached to an upper part of the counterweight 9. The camera (rear camera) 131 continuously executes shooting in such a direction as to obliquely look down at a region on the rear side of the swing structure 3 with an angle of view of approximately 180° in the left-right direction. The work machine 1 may include, besides the rear camera, a camera that executes shooting in the left direction of the swing structure 3 (left camera), a camera that executes shooting in the right direction of the swing structure 3 (right camera), and a camera that executes shooting in the front direction of the swing structure 3 (front camera). The camera 131 is, for example, a wide-angle video camera that is excellent in the durability and the weather resistance and includes an imaging element of a CCD, a CMOS, or the like and a wide-angle lens.

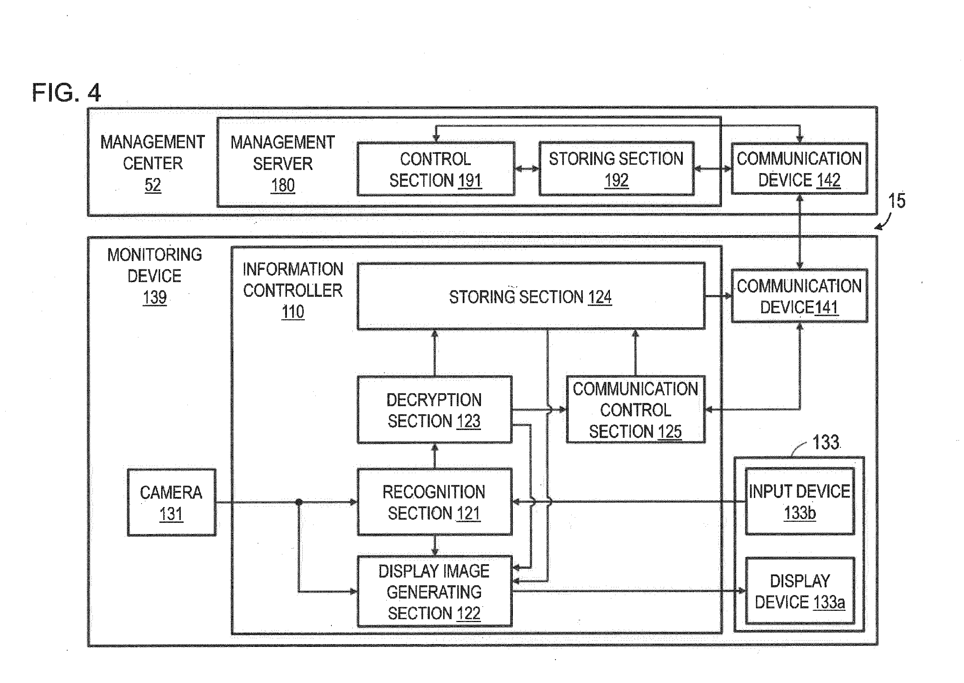

Disposed in the cab 7 are an operation device 41 (see FIG. 2) for operating the respective parts of the work machine 1, a monitor 133 that displays operation information of the work machine 1, a buzzer 132 that outputs sound, and a communication device 141 that executes communication with the external. Furthermore, disposed in the cab 7 are a main controller 100 that is a controller to control pieces of hydraulic equipment and the information controller 110 that is a controller to control the buzzer 132 and the monitor 133. The monitor 133 is a touch panel monitor in which a touch sensor as an input device 133b (see FIG. 4) is disposed on a display screen of a liquid crystal display device as a display device 133a (see FIG. 4).

The communication device 141 is a radio communication device capable of radio communication with the radio base station 51 connected to the communication line 50 that is a wide-area network, and has a communication interface including a communication antenna that uses a predetermined frequency band as the reception band. The communication device 141 may give and receive information to and from the management server 180 directly or indirectly by using a communication system such as Wi-Fi (registered trademark), ZigBee (registered trademark), or Bluetooth registered trademark).

With reference to FIG. 2, the outline of a control system of the work machine 1 of the present embodiment will be described. FIG. 2 is a diagram illustrating one example of the control system of the work machine 1. The work machine 1 includes the engine 43, a hydraulic pump 42, a control valve 40, the main controller 100, and the information controller 110.

The hydraulic pump 42 is driven by the engine 43 and delivers a hydraulic operating fluid. When an operator operates an operation lever of the operation device 41, operation information thereof is output to the main controller 100. The main controller 100 converts the acquired operation information to a control signal. The main controller 100 outputs the control signal to the hydraulic pump 42 and the control valve 40, and controls the output power of the hydraulic pump 42 and a solenoid valve (not illustrated) of the control valve 40. This drives the swing motor (hydraulic motor) 3a, the travelling motors (hydraulic motors) 2L and 2R, the boom cylinder (hydraulic cylinder) 11a, the arm cylinder (hydraulic cylinder) 12a, and the bucket cylinder (hydraulic cylinder) 13a, which are hydraulic actuators.

The main controller 100, the camera 131, the buzzer 132, the monitor 133, and the communication device 141 are connected by wire to the information controller 110 by signal lines or the like. The monitoring device 139 has the camera 131, the buzzer 132, the monitor 133, and the information controller 110. The information controller 110 notifies an operator and a maintenance worker of information through the buzzer 132 and the monitor 133 as notification devices. Furthermore, the information controller 110 controls the communication device 141 to transmit, to the management center 52, information on sensing results of various sensors disposed in the work machine 1, the operating time of the work machine 1, the control signal output from the main controller 100 to the hydraulic pump 42 and the control valve 40, and so forth.

The information controller 110 displays an image shot by the camera 131 as monitoring information on the display screen of the monitor 133. Moreover, when it is determined that an object exists around the work machine 1 (when an object is sensed), the information controller 110 causes the display screen of the monitor 133 to display an image representing that the object is sensed. When an object is sensed around the work machine 1 in work of the work machine 1, the information controller 110 makes a sound representing that the object is sensed by the buzzer 132.

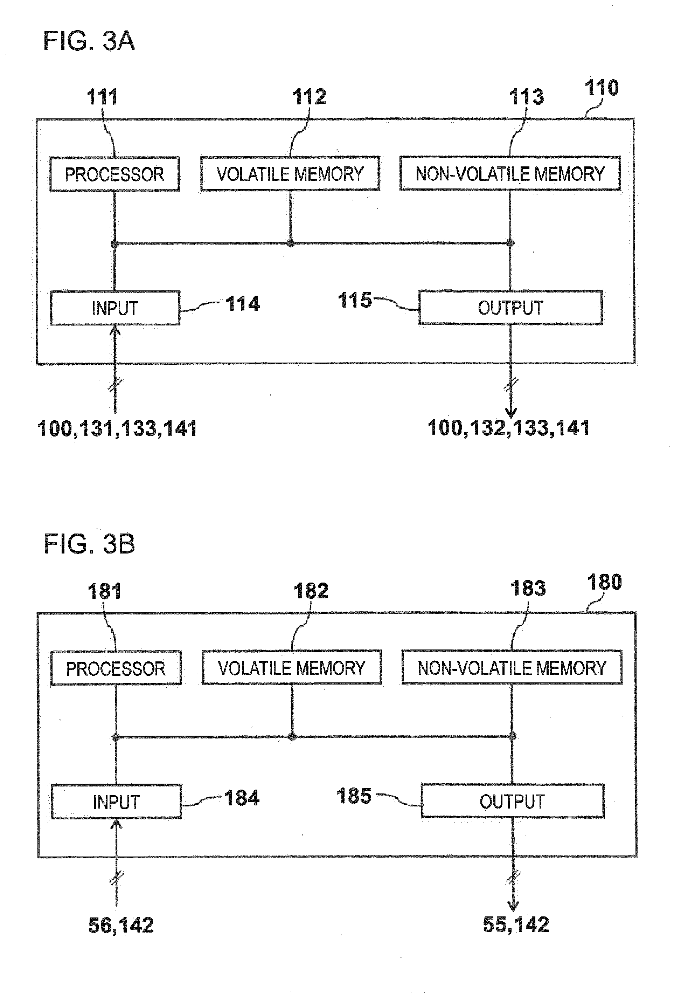

The configuration of hardware of the information controller 110 and the management server 180 will be described with reference to FIG. 3A and FIG. 3B. FIG. 3A is a hardware configuration diagram of the information controller 110. FIG. 3B is a hardware configuration diagram of the management server 180. As illustrated in FIG. 3A and FIG. 3B, the information controller 110 and the management server 180 are configured by a computer including a processor 111 or 181 such as a CPU (Central Processing Unit), MPU (Micro Processing Unit), or DSP (Digital Signal Processor) as a computation processing device, a volatile memory 112 or 182 referred to as a commonly called RAM (Random Access Memory), a non-volatile memory 113 or 183 such as a ROM (Read Only Memory), flash memory, or hard disk drive, an input interface 114 or 184, an output interface 115 or 185, and other peripheral circuits. The information controller 110 and the management server 180 may be each configured by one computer or may be each configured by a plurality of computers.

Programs that can execute various kinds of processing, such as processing of monitoring control of the surroundings of the work machine 1 and processing of acquisition of identification information of the part 151, are stored in the non-volatile memory 113. Programs that can execute various kinds of processing, such as determination processing of whether or not the part 151 is a genuine product and computation processing of a planned date of maintenance of the part 151, are stored in the non-volatile memory 183. That is, the non-volatile memories 113 and 183 are storage devices (storage media) that can read a program that implements functions of the present embodiment. The processors 111 and 181 are processing devices that load the program stored in the non-volatile memory 113 or 183 into the volatile memory 112 or 182 and execute computation, and execute predetermined computation processing for data taken in from the input interface 114 or 184, the volatile memory 112 or 182, and the non-volatile memory 113 or 183 in accordance with the program.

The input interfaces 114 and 184 convert signals input from various devices to data that can be computed by the processor 111 or 181. Furthermore, the output interfaces 115 and 185 generate a signal for output according to a computation result in the processor 111 or 181, and output the signal to various devices.

The main controller 100 is configured by a computer including a processor, a non-volatile memory, a volatile memory, an input interface, and an output interface similarly to the information controller 110.

Functions of the information controller 110. and the management server 180 will be described with reference to FIG. 4. FIG. 4 is a functional block diagram of the information controller 110 and the management server 180. The information controller 110 functions as a recognition section 121, a display image generating section 122, a decryption section 123, a storing section 124, and a communication control section 125. The management server 180 functions as a control section 191 and a storing section 192. Although not illustrated, the information controller 110 and the management server 180 have a date-and-time measurement function and stores date and time of a predetermined timing in the storing section 124 or 192.

Stored in the storing section 124 in advance are various kinds of information such as identification information unique to the work machine (its own machine) 1 (identification information of the machine body 4), the machine type of the work machine (its own machine) 1, and the names of the parts 151 attached to the work machine 1.

The recognition section 121 acquires image data arising from shooting by the camera 131 and recognizes the existence of an object within a monitoring range from the acquired image data by recognition processing using a recognition model. As the recognition model, for example, various CNN (Convolutional Neural Network) models for object recognition, such as well-known YOLO (You Only Look Once) model and SSD (Single Shot Multibox Detector) model, can be employed.

On the basis of information on the object determined to exist within the monitoring range by the recognition section 121 (information on the position coordinate of the object and the size of the object), the display image generating section 122 combines a frame image that surrounds the object with an image shot by the camera 131 and outputs the combined image to the display device 133a. The display device 133a causes the display screen to display the combined image acquired from the display image generating section 122.

The recognition section 121 executes recognition processing of a two-dimensional code when read operation of the two-dimensional code (acquisition operation of identification information of a part) is executed by the input device 133b.

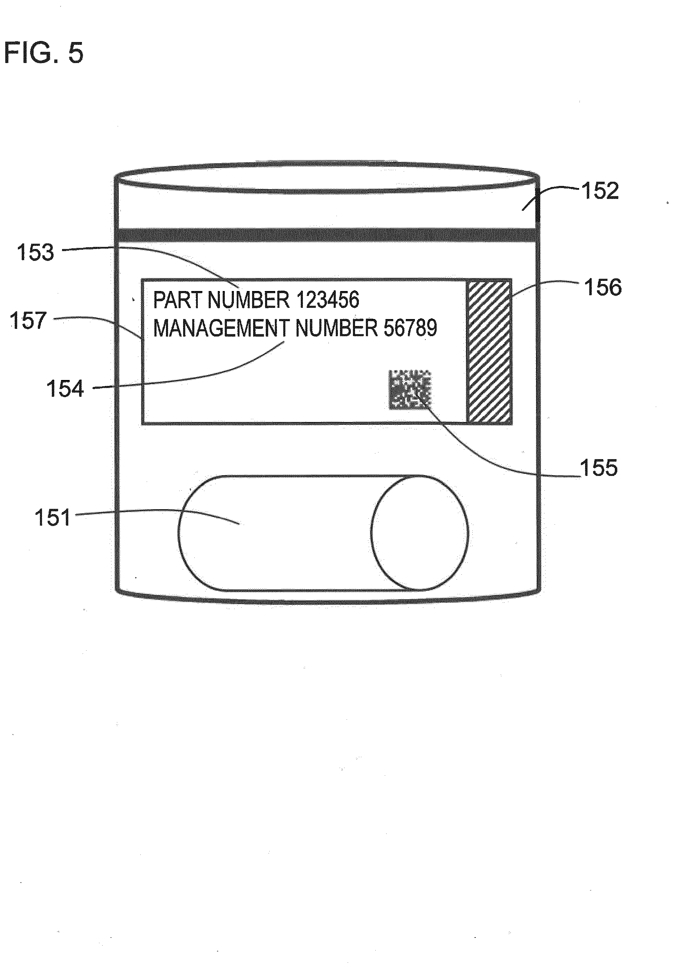

A two-dimensional code 155 will be described with reference to FIG. 5. FIG. 5 is a diagram illustrating the part 151 packaged and a label 157 including identification information given to the part 151. The part 151 illustrated in FIG. 5 is a part attached to the machine body 4 or the work device 10 at not a manufacturing factory of the work machine 1 but a service factory or work site. The part 151 is housed in a packaging bag 152. The label 151 is stuck to the packaging bag 152. A part number 153, a management number 154, and the two-dimensional code 155 are printed on the label 157 and a hologram film 156 is stuck to the label 157.

The recognition processing of the two-dimensional code 155 by the recognition section 121 illustrated in FIG. 4 will be described. In the recognition processing of the two-dimensional code 155, the recognition section 121 acquires image data arising from shooting by the camera 131 and determines whether or not the two-dimensional code 155 such as a QR code (registered trademark) exists in the acquired image data. That is, the recognition section 121 determines whether or not the two-dimensional code 155 as the identification information of the part 151 is included in the monitoring information (image data) of the surroundings of the machine body 4 acquired from the camera 131. For example, the recognition section 121 determines that the two-dimensional code 155 exists (that is, the identification information of the part 151 is included in the monitoring information) when sensing a position sensing pattern (finder pattern), and determines that the two-dimensional code 155 does not exist (that is, the identification information of the part 151 is not included in the monitoring information) when the position detection pattern is not sensed. Moreover, when the recognition section 121 determines that the two-dimensional code 155 exists, for example, in a case in which the two-dimensional code 155 has been encrypted, the recognition section 121 decodes the two-dimensional code 155 by a decoding key stored in the non-volatile memory 113 and acquires encrypted information that is information including the encrypted identification information of the part 151.

The decryption section 123 decrypts the encrypted information acquired by the recognition section 121 by using an encryption key. Thereby, the decryption section 123 acquires the identification information of the part 151 and the available time of the part 151 that have been decrypted. The decryption section 123 associates the identification information of the part 151 and the available time of the part 151 that have been decrypted with the acquisition date and time (time stamp) of the identification information of the part 151 and stores them in the storing section 124. The encryption key is stored in the storing section 124 in advance. For example, the communication control section 125 acquires the encryption key from the management server 180 through the communication device 141 and stores it in the storing section 124.

When the identification information of the part 151 is stored in the storing section 124 by the decryption section 123, the display image generating section 122 associates the identification information (decrypted identification information) of the part 151 stored in the storing section 124, the acquisition date and time of the identification information of the part 151, the available time of the part 151, and identification information of the machine body 4 stored in the storing section 124 in advance, and outputs them to the display device 133a. The display device 133a displays, on the display screen, an image representing the identification information of the part 151, the acquisition date and time of the identification information, the available time of the part 151, and the identification information of the machine body 4.

When the identification information of the part 151 is stored in the storing section 124 by the decryption section 123, the communication control section 125 associates the identification information (decrypted identification information) of the part 151 stored in the storing section 124, the acquisition date and time of the identification information of the part 151, the available time of the part 151, and the identification information of the machine body 4 stored in the storing section 124 in advance, and outputs them to the communication device 141. The communication device 141 associates the identification information of the part 151, the acquisition date and time of the identification information, the available time of the part 151, and the identification information of the machine body 4, and transmits them to the management center 52 at the external.

In the present embodiment, the identification information of the part 151 is a number in which the part number 153 and the management number 154 are consecutive, and will be referred to as a part identification number hereinafter. The part identification number is given at a manufacturing factory of the part. Furthermore, the identification information of the machine body 4 is a machine body identification number unique to the work machine 1. The machine body identification number is given at a manufacturing factory of the work machine 1.

The control section 191 acquires the machine body identification number, the part identification number associated with it, the acquisition date and time of the part identification number, and the available time of the part 151 through the communication device 142, and stores them in the storing section 192 (non-volatile memory 183). Specifically, the control section 191 updates data of a management table 80 stored in the storing section 192.

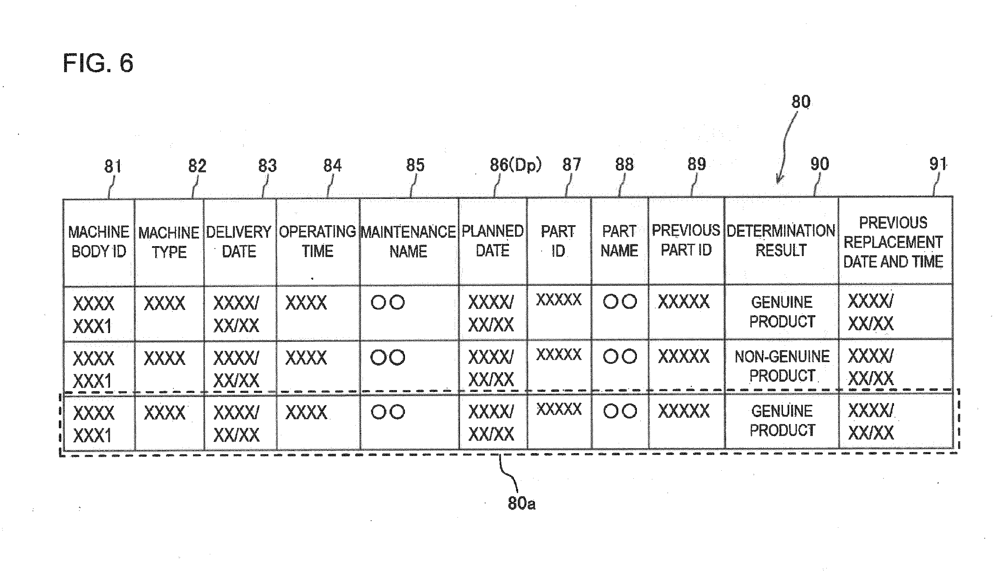

The management table 80 will be described with reference to FIG. 6. FIG. 6 is a diagram illustrating the management table 80. As illustrated in FIG. 6, the management table 80 has a machine body identification number (machine body ID) 81, a machine type 82, a delivery date 83, an operating time 84, a maintenance name 85, a planned date 86 of maintenance, a part identification number (part ID) 87; a part name 88, a previous part identification number (previous part ID) 89, a determination result 90 of genuine product/non-genuine product, and a previous replacement date and time 91. Although not illustrated, the management table 80 has customer information, the operating time at the date and time when the part has been replaced previously, and the available time of the part 151.

The machine body identification number 81 is identification information unique to the work machine 1 and is a number individually given to each one work machine 1. The machine type 82 is information representing the type of the work machine 1. The delivery date 83 is the date when the work machine 1 has been delivered to a customer. The operating time 84 is a value obtained by accumulating the time for which the work machine 1 has operated from the delivery date. The maintenance name 85 represents maintenance work such as "hydraulic operating fluid filter replacement," for example. The planned date 86 is a scheduled date when maintenance work will be executed. The part identification number 87 is identification information unique to the part 151 that becomes a target of maintenance work and is a number individually given to each one part 151. The part name 88 is the name of the part 151 that becomes a target of maintenance work, such as a "hydraulic operating fluid filter," for example. The previous part identification number 89 is identification information unique to the part 151 previously replaced and is a number individually given to each one part 151. The determination result 90 is information representing the determination result of genuine product/non-genuine product by the control section 191 to be described later. The previous replacement date and time 91 is the date when the part 151 identified by the previous part identification number 89 has been replaced by the part 151 identified by the part identification number 87. The previous replacement date and time 91 is set on the basis of the acquisition date and time of the part identification number 87.

When the work machine 1 is manufactured and is delivered to a customer, a manager sets the machine body identification number 81, the machine type 82, the delivery date 83, the maintenance name 85, the part identification number 87, and the part name 88. Before the work machine 1 is delivered, the operating time 84, the previous part identification number 89, the determination result 90, and the previous replacement date and time 91 have not been set. The operating time 84 is included in machine body information transmitted from the work machine 1 and is updated at the timing when the machine body information has been acquired. The planned date 86, the previous part identification number 89, the determination result 90, and the previous replacement date and time 91 are updated every time the part 151 is replaced. When the part 151 is replaced, the operating time at the timing is held as the operating time at the date and time when the part has been replaced previously. That is, the operating time at the updated previous replacement date and time 91 is held as the operating time at the date and time when the part has been replaced previously.

Various kinds of information of a plurality of work machines 1 are stored in the management table 80. When operation to display the management table 80 is executed by the input device 56, the control section 191 reads out the management table 80 from the storing section 192 and causes the display screen of the display device 55 to display the management table 80. This allows the manager to check the parts 151 attached to the work machine 1 and the planned date 86 of maintenance. That is, the manager can check which work machine 1 the part 151 shipped from a manufacturing.factory of the part 151 to a predetermined work site has been attached to, and grasp appropriate replacement timing of the part 151.

When the part 151 has never been replaced, the control section 191 illustrated in FIG. 4 computes the planned date 86 of maintenance of the part 151 on the basis of the operating time 84 from the delivery date of the work machine 1 and the available time of the part 151 associated with the part identification number 87. When the part 151 has been replaced, the control section 191 computes the planned date 86 of maintenance of the part 151 on the basis of the operating time of the machine body 4 from acquisition of the part identification number 87 by the information controller 110 and the available time of the part 151 associated with the part identification number 87. The operating time from acquisition of the part identification number 87 by the information controller 110 can be obtained by subtracting the operating time at the date and time when the part has been replaced previously (previous replacement date and time 91) from the operating time 84 from the delivery date of the work machine 1.

The control section 191 stores the computation result of the planned date 86 in the management table 80. When the planned date 86 has been already stored in the management table 80, the control section 191 updates the planned date 86.

The control section 191 compares the acquired part identification number (identification information of the part) 87 and a part registration number stored in the storing section 192 in advance (that is, identification information registered in advance) and determines whether or not the part identification number 87 and the part registration number match. When the acquired part identification number 87 matches the part registration number stored in the storing section 192, the control section 191 determines that the part 151 is a genuine product. When the acquired part identification number 87 does not match the part registration number stored in the storing section 192, the control section 191 determines that the part 151 is not a genuine product (that is, is a non-genuine product).

When sending the part 151, the manufacturer of the part 151 informs the manager of the work machine 1 of the part identification number 87. The manager inputs the informed part identification number 87 to the management server 180 through the input device 56. The control section 191 stores the part identification number 87 input by the input device 56 in the storing section 192 as the part registration number.

The control section 191 stores the determination result 90 of genuine product/non-genuine product in the management table 80. The control section 191 updates the determination result 90 when the determination result 90 has been already stored in the management table 80. That is, the control section 191 associates the machine body identification number 81, the part identification number 87, and information about whether the part 151 is a genuine product or a non-genuine product.and stores them in the storing section 192.

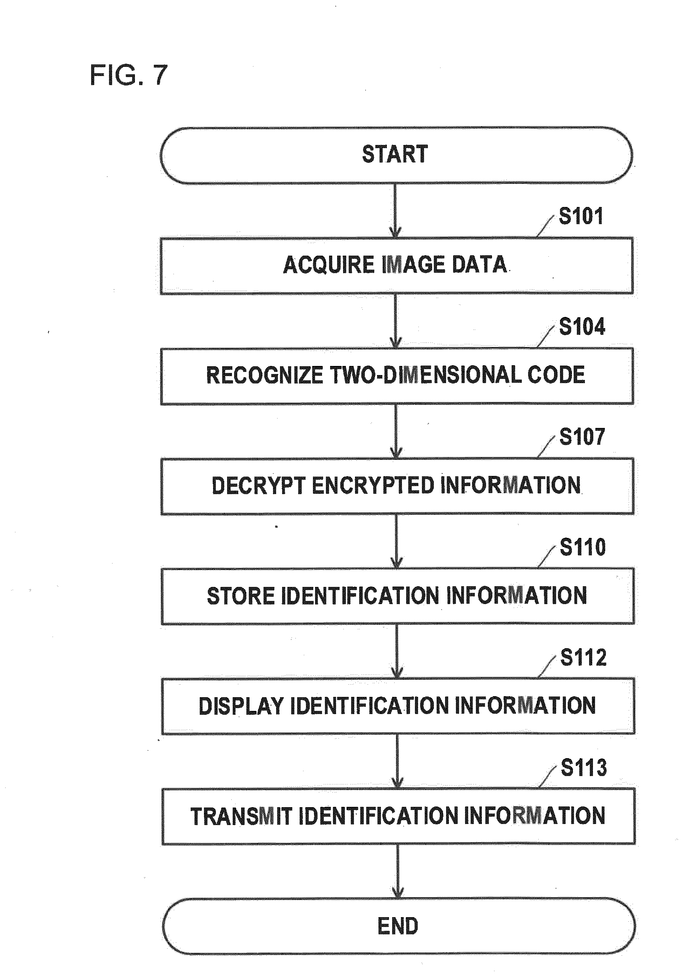

With reference to FIG. 7, the flow of processing executed by the information controller 110 in replacement work of the part 151 will be described. For example, the processing of the flowchart illustrated in FIG. 7 is initiated by turning-on of an ignition switch of the work machine 1 and execution of read operation of the two-dimensional code 155 (acquisition operation of the identification information of a part) by the input device 133b by a worker who executes maintenance, and is repeatedly executed at a predetermined control cycle after initial setting is executed.

In a step S101, the information controller 110 acquires data of an image shot by the camera 131 (monitoring information) from the camera 131, and proceeds to a step S104. In the step S104, the information controller 110 executes recognition processing of the two-dimensional code 155 for the image data acquired in the step S101, and proceeds to a step S107. In this recognition processing, the two-dimensional code 155 is converted to encrypted information.

In the step S107, the information controller 110 decrypts the encrypted information acquired in the step S104, and proceeds to a step S110. The part identification number 87, the acquisition date and time of the part identification number 87, and the available time of the part 151 are included in the decrypted information.

In the step S110, the information controller 110 stores the acquired part identification number 87, the acquisition date and time of the part identification number 87, and the available time of the part 151 in the non-volatile memory 113, and proceeds to a step S112.

In the step S112, the information controller 110 outputs, to the display device 133a, the part number 153 included in the part identification number 87, the acquisition date and time of the part identification number 87, the available time of the part 151, the machine body identification information 81 of the work machine 1, and the machine type 82. For example, the display device 133a displays, on the display screen, "part number 123456" as an image representing the part number 153, "hydraulic operating fluid filter" as an image representing the name of the part corresponding to the part number 153, "replacement date and time of part: XXXX/XX/XX" as an image representing the acquisition date and time of the part identification number 87, "available time of part: XXXX [hours]" as an image representing the available time of the part 151, "machine body ID: XXXXXXX1" as an image representing the machine body identification information 81 of the work machine 1, and "machine type: XXXX" as an image representing the machine type 82.

When the display processing of the identification information in the step S112 has been completed, the processing proceeds to a step S113. In the step S113, the information controller 110 associates the part identification number 87 of the part 151, the acquisition date and time of the part identification number 87, the available time of the part 151, and the machine body identification number 81 stored in the non-volatile memory 113 in advance, and transmits them to the management server 180. When the transmission processing of the identification information in the step S113 has been completed, the processing illustrated in the flowchart of FIG. 7 ends.

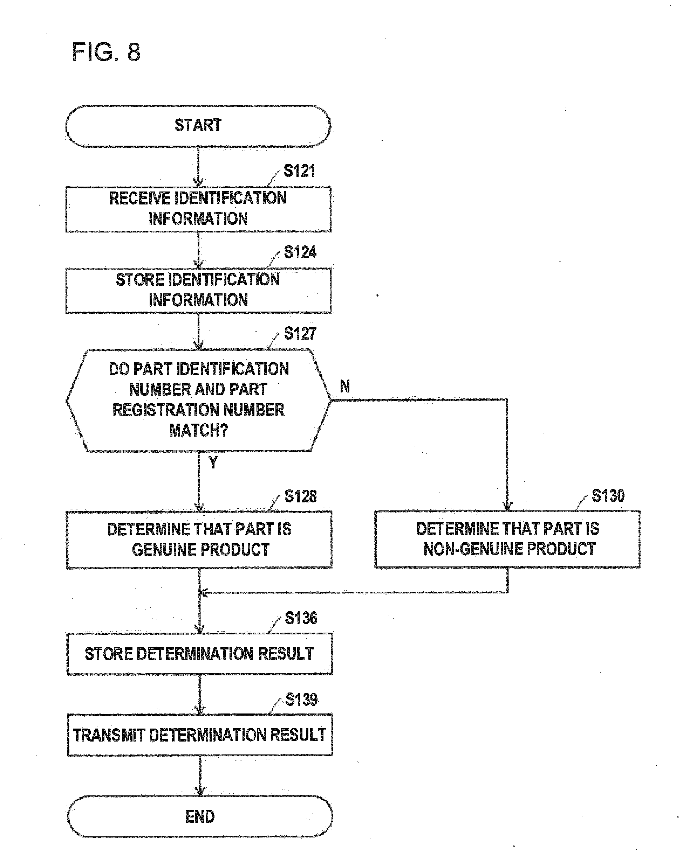

With reference to FIG. 8, the flow of processing executed by the management server 180 in replacement work of the part 151 will be described. The processing of the flowchart illustrated in FIG. 8 is initiated by powering-on of the management server 180 and activation of application software for management installed on the management server 180, and is repeatedly executed at a predetermined control cycle after initial setting is executed.

In a step S121, the management server 180 receives the part identification number 87, the machine body identification number 81 associated with it, the acquisition date and time of the part identification number 87, and the available time of the part 151, and proceeds to a step S124.

In the step S124, the management server 180 stores, in the management table 80, the machine body identification number 81, the part identification number 87, the acquisition date and time of the part identification number 87, and the available time of the part 151 that have been received. Specifically, the management server 180 rewrites the part identification number 87 in a storage area (equivalent to one row of the management table 80 illustrated in FIG. 6) 80a in which the part name 88 corresponding to the received machine body identification number 81 and the received part identification number 87 is stored from the old one to the new one. The part number 153 is included in the part identification number 87. Thus, the management server 180 can select the storage area 80a of the part name 88 associated with the part number 153. Here, the old part identification number (part identification number before update) 87 stored in the management table 80 is stored as the previous part identification number 89 (see FIG. 6). Moreover, the management server 180 stores the acquisition date and time of the part identification number 87 in the storage area 80a of the management table 80 as the previous replacement date and time 91. Similarly, the management server 180 stores also the available time of the part 151 in the storage area 80a.

When the storing processing of the identification information in the step S124 has been completed, the processing proceeds to a step S127. In the step S127, the management server 180 determines whether or not the part identification number (part identification number after update) 87 stored in the step S124 and the part registration number stored in the non-volatilememory 183 in advance match. When it is determined that the part identification number 87 and the part registration number match in the step S127, the processing proceeds to a step S128. When it is determined that the part identification number 87 and the part registration number do not match in the step S127, that is, when it is determined that the part registration number corresponding to the part identification number 87 is not stored in the non-volatile memory 183, the processing proceeds to a step S130.

In the step S128, the management server 180 determines that the part 151 is a genuine product, and proceeds to a step S136. In the step S130, the management server 180 determines that the part 151 is a non-genuine product, and proceeds to the step S136.

In the step S136, the management server 180 stores the determination result 90 in the above-described storage area 80a (see FIG. 6) in the management table 80, and proceeds to a step S139. In the step S139, the management server 180 transmits the determination result 90 to the work machine 1 of the machine body identification number 81 associated with the part identification number 87, and ends the processing illustrated in the flowchart of FIG. 8.

When receiving the determination result. 90, the information controller 110 of the work machine 1 causes the display screen of the display device 133a to display the part name corresponding to the part identification number 87 and the determination result 90 of genuine product/non-genuine product. This allows the worker to come to know whether the part 151 is a genuine product or a non-genuine product before attachment of the part 151. In this manner, the information controller 110 can alert the worker when the part 151 is a non-genuine product. Furthermore, when the part 151 is a genuine product, the information controller 110 can suggest, to the operator, owner, or the like of the work machine 1, that the quality of the part 151 is assured and that it is possible to receive proper maintenance of the part 151.

The information controller 110 may be configured to display check of whether or not a genuine product (part) is attached or a recommendation message of attachment when the determination result 90 has failed to be received (has not been received) for a certain period for example. This makes it possible to ensure operation of the work machine 1.

The management server 180 can manage the attached parts 151 for each work machine 1 by the management table 80. This allows provision of various services such as giving of merits for part purchase through issuance of a point or service coupon by a supervising agent of the work machine 1. Moreover, the agent can easily obtain certification of genuineness of the part 151 attached to the work machine 1 from the management server 180. As a result, it is also possible for the agent to include the genuineness of the part, 151 attached to the work machine 1 in factors for consideration of the trade-in price of the work machine 1.

When receiving the same part identification number 87 a plurality of times, the management server 180 may determine that the part identification numbers 87 received in the second and subsequent receptions are illegal part identification numbers, and transmit the determination result to the work machine 1. For example, when it is determined that the part 151 is a genuine product in the step S128, the management server 180 stores the part identification number 87 used for the determination processing of genuine product/non-genuine product in the non-volatile memory 183 as a determination-completed number. The management server 180 determines whether or not the part identification number 87 stored in the step S124 matches the determination-completed number stored in the non-volatile memory 183 in the period between the processing of the step S124 and the processing of the step S127. When the part identification number 87 matches the determination-completed number, the management server 180 determines that the part identification number 87 is an illegal part identification number, and transmits the determination result to the work machine 1. When it is determined that the part identification number 87 does not match the determination-completed number, the processing proceeds to the step S127.

The management server 180 executes unified management of the part identification numbers 87 attached to each of a large number of work machines 1 that execute work at various work sites. Thus, for example, when acquiring the predetermined part identification number 87 from the work machine 1 disposed at work site A and thereafter acquiring the same part identification number 87 as the above-described part identification number 87 from the work machine 1 disposed at work site B different from work site A, the management server 180 can notify a worker at work site B that there is a possibility that the part identification number 87 is not a genuine product through the display device 133a of the work machine 1 at work site B.

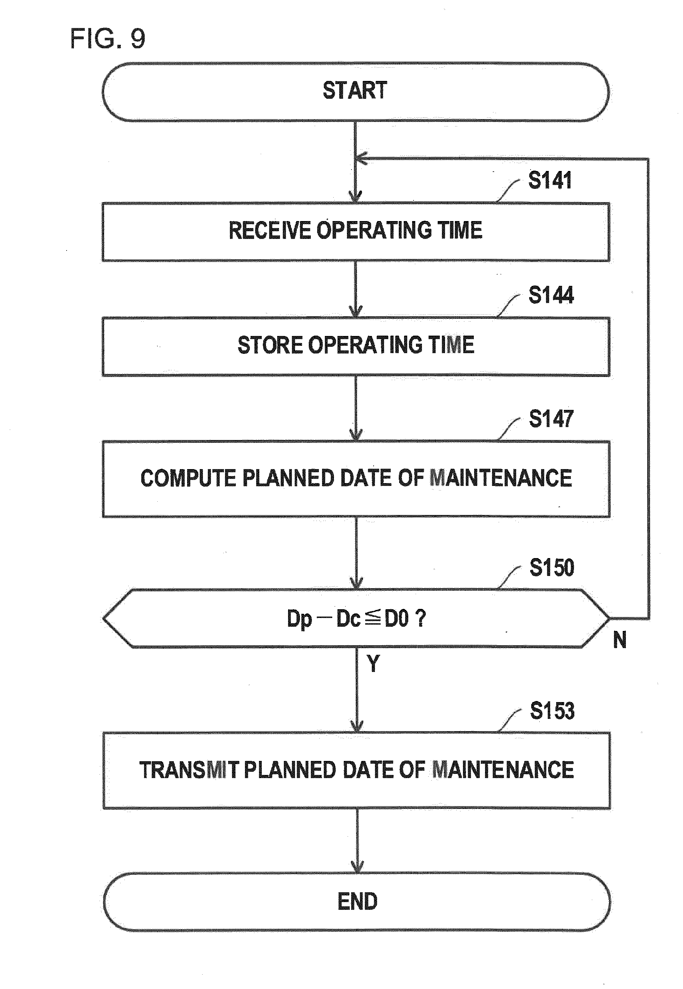

With reference to FIG. 9, description will be made about processing for notifying an operator or the like of a planned date of maintenance of the part 151, which processing is executed by the management server 180. The processing of the flowchart illustrated in FIG. 9 is initiated by powering-on of the management server 180 and activation of application software for management installed on the management server 180, and is repeatedly executed at a predetermined control cycle after initial setting is executed.

In a step S141, the management server 180 receives the operating time 84 from the work machine 1, and proceeds to a step S144. In the step S144, the management server 180 stores the operating time 84 in the management table 80. That is, the management server 180 rewrites the operating time 84 of the management table 80 from the old one to the new one.

When the storing processing of the operating time in the step S144 has been completed, the processing proceeds to a step S147. In the step S147, the management server 180 compute a planned date Dp of maintenance, and proceeds to a step S150. The computed planned date Dp of maintenance is stored as the planned date 86 of the management table 80.

In the step S150, the management server 180 determines whether or not the number of dates obtained by subtracting a current date Dc from the planned date Dp of maintenance is equal to or smaller than a number-of-dates threshold D0. The number-of-dates threshold D0 is a threshold for determining whether or not to notify the operator of maintenance information and is stored in the non-volatile memory 183 in advance.

When it is determined that the number of dates obtained by subtracting the current date Dc from the planned date Dp is equal to or smaller than the number-of-dates threshold D0 in the step S150, the processing proceeds to a step S153. When it is determined that the number of dates obtained by subtracting the current date Dc from the planned date Dp is larger than the number-of-dates threshold D0 in the step S153, the processing returns to the step S141.

In the step S153, the management server 180 transmits the planned date Dp of maintenance computed in the step S147, the part identification number 87, the previous replacement date and time 91, and the maintenance name 85 to the work machine 1 of the machine body identification number 81 associated with the part identification number 87, and ends the processing illustrated in the flowchart of FIG. 9.

When receiving the information on the planned date Dp of maintenance and so forth, the information controller 110 of the work machine 1 causes the display screen of the display device 133a to display the part number 153 and the part name corresponding to the part identification number 87, the previous replacement date and time 91, the maintenance name 85, and the planned date Dp of maintenance. This allows the operator to come to know the maintenance timing of the part 151 and adjust the schedule of maintenance smoothly and properly. Furthermore, the operator and the work supervisor can properly make a subsequent work plan.

The following operation and effects are provided according to the above-described embodiment.
(1) The work machine 1 includes the machine body 4, the work device 10 attached to the machine body 4, the monitoring device 139 that is attached to the machine body 4 and monitors the surroundings of the machine body 4, the non-volatile memory (storage device) 113 in which the identification information (machine body identification number 81) of the machine body 4 is stored, the information controller (controller) 110 that controls the monitoring device 139, and the communication device 141 that executes communication with the external. The information controller 110 determines whether or not the identification information of the part 151 attached to the machine body 4 or the work device 10 is included in the monitoring information acquired by the camera (external recognition sensor) 131 of the monitoring device 139. When the identification information of the part 151 is included in the monitoring information, the information controller 110 associates the identification information (part identification number 87) of the part 151 with the machine body identification number 81 stored in the non-volatile memory 113, and transmits them to the external by the communication device 141.

According to this configuration, the part identification number 87 can be acquired by using the monitoring device 139 mounted in the work machine 1. Therefore, there is no need to prepare a device (for example, smartphone or the like) for acquiring the part identification number 87 separately from the monitoring device 139. Moreover, the machine body identification number 81 is stored in the non-volatile memory 113 in advance. Therefore, there is also no need to read the machine body identification number 81 printed on a label stuck to an outer circumferential surface or the like of the machine body 4. Thus, it is possible to provide the work machine 1 that can easily execute work for associating the machine body identification number 81 of the work machine 1 with the part identification number 87 of the part 151.

When a label on which the machine body identification number 81 is printed is stuck to an outer circumferential surface or the like of the machine body 4, the label deteriorates or the label is hidden by earth and sand or the like in some cases. Thus, in the case of reading the machine body identification number 81 on the label stuck to an outer circumferential surface or the like of the machine body 4 by using a smartphone or the like, there is a possibility that a long time is required for the read work or the reading fails.

In contrast, according to the present embodiment, the machine body identification number 81 of the work machine 1 is stored in the non-volatile memory 113 of the information controller 110 of the work machine 1 in advance. Therefore, the work for associating the machine body identification number 81 of the work machine 1 with the part identification number 87 of the part 151 can be easily executed also from this viewpoint.

(2) Furthermore, the parts management system 15 of the work machine includes the monitoring device 139 that monitors the surroundings of the machine body 4 of the work machine 1 and the management server 180 having the non-volatile memory (storage device) 183 that acquires, from the work machine 1, the identification information (part identification number 87) of the part 151 attached to the machine body 4, which identification information is acquired by the monitoring device 139, and the identification information (machine body identification number 81) of the machine body 4, and associates the identification information of the part 151 with the identification information of the machine body 4 and stores them. Therefore, according to the present embodiment, it is possible to provide the parts management system 15 that can easily execute work for associating the identification information of the work machine 1 with the identification information of the part 151.

(3) The management server 180 is disposed outside the work machine 1 and functions as a determination device that determines whether or not the part 151 is a genuine product on the basis of the identification information (part identification number 87) of the part 151 and the part registration number that is identification information registered in advance. Moreover, the parts management system 15 includes the display device 133a that is disposed in the work machine 1 and functions as a notification device that notifies a worker or the like of the determination result 90 of the management server 180.

According to this configuration, it is possible to let the worker know whether the part 151 is a genuine product or a non-genuine product before attachment of the part 151. This can prevent attachment of a non-genuine product to the work machine 1.

(4) The parts management system 15 includes the information controller 110 functioning as a controller that acquires information relating to the available time of the part 151 through the camera (external recognition sensor) 131 of the monitoring device 139, the management server 180 functioning as a computing device that computes the planned date Dp of maintenance of the part 151 on the basis of the operating time of the work machine 1 from acquisition of the identification information (part identification number 87) of the part 151 by the information controller 110 and the available time of the part 151, and the display device 133a functioning as a notification device that notifies an operator, worker, or the like of the planned date Dp.

According to this configuration, the operator, work supervisor, or the like can come to know the planned date Dp of maintenance, and thus can properly make a subsequent work plan.

(5) The above-described parts management system 15 can be configured by installing an identification information acquisition program that enables execution of the series of processing illustrated in the flowchart of FIG. 7 on the information controller 110 of the work machine 1. Thus, the above-described parts management system 15 can be configured easily and inexpensively not only in the case of shipping the work machine 1 on which the identification information acquisition program has been preinstalled but also in the case of installing the identification information acquisition program on the information controller 110 of the work machine 1 that has been already operating at a work site.

### <Modification Example of First Embodiment>

Similarly to the first embodiment, the information controller 110 according to a modification example of the first embodiment acquires encrypted information that is encrypted identification information of a part through the monitoring device 139, and decrypts the acquired encrypted information of the part 151, and associates the part identification number 87 that is the decrypted identification information of the part with the machine body identification number 81 that is the identification information of the machine body 4 to output them to the display device 133a and the communication device 141.

An encryption key is required for the decryption of the encrypted information. Here, in the present modification example, the encryption key is issued from the manufacturer of a genuine product and is stored in the non-volatile memory 113 of the information controller 110 in advance. In the present modification example, when succeeding in the decryption of the encrypted information, the information controller 110 determines that the part 151 is a genuine product, and causes the display device 133a to display the determination result. When failing in the decryption of the encrypted information, the information controller 110 determines that the part 151 is a non-genuine product, and causes the display device 133a to display the determination result.

Therefore, according to the present modification example, also when the communication state between the work machine 1 and the management server 180 is not favorable or when communication equipment is not disposed at the place where replacement work of the part 151. is executed (service factory, work site, or the like), whether or not the part 151 is a genuine product can be notified to the worker before attachment of the part 151.

### <Another Modification Example of First Embodiment>

In the above-described first embodiment, description has been made about the example in which the information controller 110 acquires encrypted information by decoding the two-dimensional code 155 by the decoding key and decrypts the encrypted information by the encryption key. However, the present invention is not limited thereto. The information controller 110 may acquire the part identification number 87 that is not encrypted by decoding the two-dimensional code 155.

### <Second Embodiment>

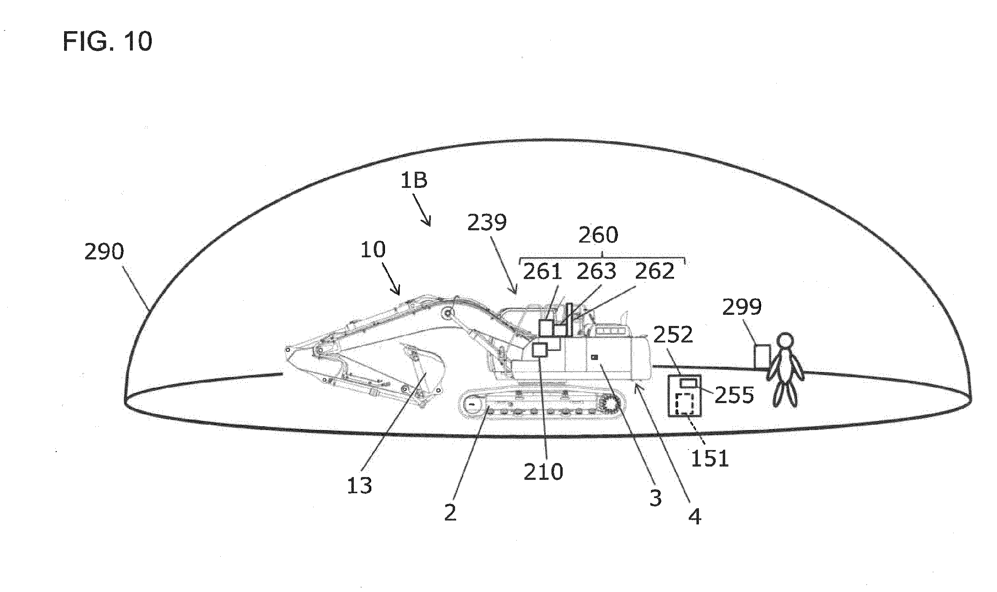

A work machine 1B according to a second embodiment of the present invention will be described with reference to FIG. 10. FIG. 10 is a diagram illustrating a monitoring device 239 of the work machine 1B according to the second embodiment. A configuration that is the same as or equivalent to the configuration described in the first embodiment is given the same reference numeral and differences will be mainly described. In the first embodiment, the example in which the monitoring device 139 monitors the surroundings of the machine body 4 of the work machine 1 by using the camera 131 has been described. In contrast, the monitoring device 239 of the work machine 1B according to the second embodiment monitors the surroundings of the machine body 4 of the work machine 1B by an RFID (Radio Frequency IDentification) system.

The monitoring device 239 includes a tag detection device (external recognition sensor) 260 that detects the entry of a worker into the work range of the work machine 1B on the basis of a signal transmitted from an RFID tag 299 possessed by the worker and an information controller 210 that is a controller to control the monitoring device 239'. The tag detection device 260 has a magnetic field generating device 261 that generates a magnetic field to excite the RFID tag 299 and a receiver 262 for receiving radio waves generated by the RFID tag 299 due to the magnetic field generated by the magnetic field generating device 261. The tag detection device 260 has also a detection controller 263 that controls the magnetic field generated by the magnetic field generating device 261 on the basis of a control signal from the information controller 210 and acquires a worker ID included in the radio waves (signal) received by the receiver 262 to output the worker ID to the information controller 210.

The magnetic field generating device 261 is disposed on the swing center axis of the swing structure 3, for example. The magnetic field generating device 261 generates a magnetic field with certain intensity. In this case, a magnetic field detectable area 290 becomes a certain range centered at the magnetic field generating device 261. The magnetic field detectable area 290 is a range in which the magnetic field generated by the magnetic field generating device 261 can be received with the magnetic field detection sensitivity of the RFID tag 299. The RFID tag 299 outputs radio waves to the receiver 262 when receiving the magnetic field from the magnetic field generating device 261. Thus, the magnetic field detectable area 290 is the area in which the RFID tag 299 can be detected by the tag detection device 260.

The magnetic field detectable area 290 with a hemispherical shape is formed by the magnetic field generated by the magnetic field generating device 261. The size of the magnetic field detectable area 290 can be changed by adjusting the intensity of the magnetic field generated by the magnetic field generating device 261. When a worker enters the magnetic field detectable area 290, operation of the work machine 1B is limited. Thus, when the magnetic field detectable area 290 is too small with respect to the work range, there is a possibility that the limitation of operation of the work machine 1B does not properly function in response to approach of a worker. Conversely, when the magnetic field detectable area 290 is too large, operation of the work machine 1B is limited although there is no possibility of collision and the efficiency of work lowers. Thus, in the present embodiment, the magnetic field detectable area 290 is set to a size that is equivalent to or larger than the work range of the work machine 1B and is not larger than necessary.

The magnetic field detectable area 290 is not limited to the case in which it has the hemispherical shape and may be a semi-ellipsoid for example. The work range of the work machine 1B is the range that can be reached by the tip of the work device 10 when the work device 10 and the swing structure 3 are operated in the state in which the track structure 2 of the work machine 1B is stopped. The work range is set on the basis of the maximum swing radius of the work machine 1B, for example. The maximum swing radius is equivalent to the length from the swing center axis of the swing structure 3 to the tip of the bucket 13 when the work device 10 is stretched toward the front side (direction orthogonal to the swing center axis).

The RFID tag 299 retains a unique worker ID and generates radio waves including the worker ID when existing in the magnetic field detectable area 290. The RFID tag 299 is attached to a helmet or the like of a worker, for example. The worker always carries the same RFID tag 299. This allows the information controller 210 to identify the worker from the worker ID.

When receiving radio waves generated by the RFID tag 299 by the receiver 262, the detection controller 263 detects the entry of a worker into the magnetic field detectable area 290, that is, the entry of the worker into the work range of the work machine 1B. The detection controller 263 outputs the worker ID of the worker who has entered the work range of the work machine 1B to the information controller 210. By receiving the worker ID of the worker from the detection controller 263, the information controller 210 detects the entry of the worker into the work range of the work machine 1B.

When detecting the entry of the worker into the work range of the work machine 1B, the information controller 210 notifies the operator that the entry of the worker into the work range has been detected by the monitor 133 and the buzzer 132. Furthermore, the information controller 210 outputs the detection of the entry of the worker into the work range to the main controller 100. This causes the main controller 100 to execute operation limitation control to limit operation of the actuators of the work machine 1B. For example, the operation limitation control is control to decrease the rotation speed of the engine 43 and apply a limitation to a control current from the main controller 100 to the solenoid valve of the control valve 40.

When acquisition operation of identification information of the part 151 is executed by the input device 133b, the information controller 210 acquires information on an RFID tag existing around the work machine 1B.

In the second embodiment, an RFID tag 255 is housed in a packaging bag 252 together with the part 151. When receiving radio waves generated by the RFID tag 255 by the receiver 262, the detection controller 263 converts the received analog signal to a digital signal and outputs it to the information controller 210. The digital signal input to the information controller 210 is encrypted information. Thus, the information controller 210 decrypts the encrypted information and stores the decrypted information in the non-volatile memory 113 similarly to the first embodiment. The part identification number 87 of the part 151 is included in the decrypted monitoring information.

When the identification information of the part 151 is included in the monitoring information, the information controller 210 associates the part identification number 87 stored in the non-volatile memory 113 with the machine body identification number 81, and transmits them to the management server 180 at the external by the communication device 141. Furthermore, the information controller 210 causes the display device 133a to display the part number 153 included in the part identification number 87, the acquisition date and time of the part identification number 87, the available time of the part 151, the machine body identification number 81 of the work machine 1B, and the machine type 82. Similarly to the first embodiment, the information controller 210 transmits also the acquisition date and time of the part identification number 87 and the available time of the part 151 to the management server 180. Processing in the management server 180 is similar to that in the first embodiment. Moreover, processing of the information controller 210 of the work machine 1B after information on the determination result of genuine product/non-genuine product and so forth is transmitted from the management server 180 to the work machine 1B is also similar to that in the first embodiment.

According to such a second embodiment, operation and effects similar to those of the first embodiment are provided. Furthermore, in the second embodiment, it suffices to bring the packaging bag 252 that houses the part 151 and the RFID tag 255 into the work range of the work machine 1B. Therefore, the identification information of the part 151 can be taken into the information controller 210 more easily than in the first embodiment.

The following modification examples are also within the scope of the present invention and it is also possible to combine a configuration illustrated in the modification example and a configuration explained in the above-described embodiment, and combine configurations explained in the above-described different embodiments with each other and combine configurations to be explained in the following different modification examples with each other.

### <Modification Example 1>

The information controller 110 or 210 of the work machine 1 or 1B may have part or all of the functions of the management server 180 explained in the above-described embodiments.

### <Modification Example 1-1>

For example, it is also possible to employ a configuration.in which the information controller 110 disposed in the work machine 1 functions as a determination device that executes determination processing of genuine product/non-genuine product. In this case, the information controller 110 determines whether or not the part 151 is a genuine product on the basis of the part identification number 87 that is the identification information of the part 151 and the part registration number that is identification information registered in advance. That is, the information controller 110 is configured to be capable of executing the steps S127, S128, S130, and S136 in FIG. 8. The part registration number is stored in the non-volatile memory 113 of the information controller 110 in advance. The information controller 110 causes the determination result of whether or not the part 151 is a genuine product to be notified by the display device 133a as a notification device.

According to this configuration, also when the communication state between the work machine 1 and the management server 180 is not favorable or when communication equipment is not disposed at the place where replacement work of the part 151 is executed (service factory, work site, or the like), whether or not the part 151 is a genuine product can be notified to the worker before attachment of the part 151.

### <Modification Example 1-2>

It is also possible to employ a configuration in which the information controller 110 disposed in the work machine 1 functions as a computing device that executes computation processing of the planned date Dp of maintenance. In this case, the information controller 110 acquires information relating to the available time of the part 151 through the camera (external recognition sensor) 131 of the monitoring device 139, and computes the planned date Dp of maintenance of the part 151 on the basis of the operating time of the machine body 4 from acquisition of the identification information (part identification number 87) of the part 151 and the available time of the part 151 to cause the display device 133a as a notification device to notify about the computed planned date Dp.

According to this configuration, also when the communication state between the work machine 1 and the management server 180 is not favorable or when communication equipment is not disposed at the place where replacement work of the part 151 is executed (service factory, work site, or the like), the planned date Dp of maintenance of the part 151 can be notified to the worker.

### <Modification Example 2>

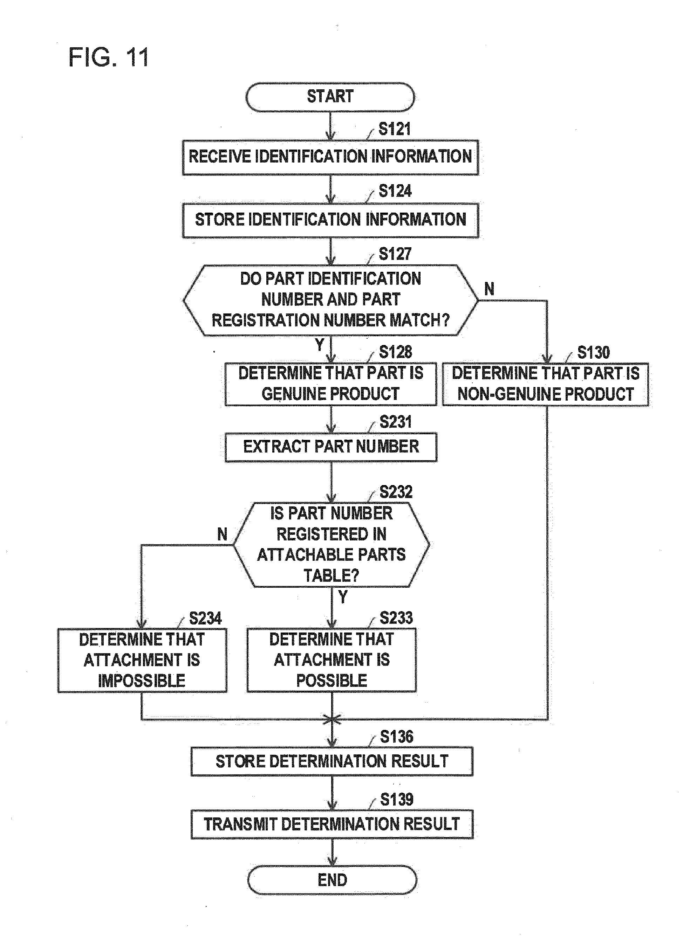

The management server 180 may determine whether or not the part 151 is attachable to the work machine 1 and transmit the determination result to the information controller 110. The flow of processing executed by the management server 180 according to the present modification example 2 will be described with reference to FIG. 11. FIG. 11 is a diagram.similar to FIG. 8 and the same processing as the processing in FIG. 8 is given the same numeral. In FIG. 11, processing of steps S231, S232, S233, and S234 is added between the processing of the step S128 and the processing of the step S136 in the flowchart of FIG. 8.

As illustrated in FIG. 11, the management server 180 proceeds to the step S231 upon completing the processing of the step S128. In the step S231, the management server 180 extracts the part number 153 included in the part identification number 87, and proceeds to the step S232. In the step S232, the management server 180 determines whether or not the part number 153 extracted in the step S231 is registered in an attachable parts table corresponding to the machine body identification number 81 stored in the step S124. The attachable parts table is stored in the non-volatile memory 183 regarding each machine type 82 of the work machine 1. The attachable parts table is a data table in which the part numbers 153 of approximately several tens to several hundreds of parts 151 that can be attached to the work machine 1 of the machine type 82 are stored.

When it is determined that the part number 153 acquired from the work machine 1 is registered in the attachable parts table in the step S232, the processing proceeds to the step S233. When it is determined that the part number 153 acquired from the work machine 1 is not registered in the attachable parts table in the step S232, the processing proceeds to the step S234.

In the step S233, the management server 180 determines that attachment of the part 151 is possible, and proceeds to the step S136. In the step S234, the management server 180 determines that attachment of the part 151 is impossible, and proceeds to the step S136.

When the affirmative determination has been made in the step S127 and the affirmative determination has been made in the step S232, the management server 180 stores the determination result of the steps S128 and S233 in the non-volatile memory 183 in the step S136. When the affirmative determination has been made in the step S127 and the negative determination has been made in the step S232, the management server 180 stores the determination result of the steps S128 and S234 in the non-volatile memory 183 in the step S136. When the negative determination has been made in the step S127, the management server 180 stores the determination result of the step S130 in the non-volatile memory 183 in the step S136. When the storing processing of the determination result in the step S136 has been completed, the processing proceeds to the step S139. In the step S139, the management server 180 transmits the determination result stored in the step S136 to the work machine 1.

The information controller 110 of the work machine 1 causes the display screen of the display device 133a to display the received determination result. When receiving the determination result representing that attachment of the part 151 is impossible from the management server 180, the information controller 110 causes the display screen of the display device 133a to display an image representing that the part 151 is a non-attachable part. For example, the display device 133a causes the display screen to display a message image such as "the part with part number XXXX can not be attached because having no compatibility."

As above, the parts management system 15 according to the present modification example 2 includes the management server 180 as a determination device that determines whether or not the part 151 is a part attachable to the work machine 1 on the basis of the part number 153 included in the part identification number 87 that is the identification information of the part 151 and the part number stored in the non-volatile memory (storage device) 183 (that is, part number registered in advance), and the display device 133a as a notification device that notifies the worker or the like of the determination result of the management server 180.

According to the present modification example 2, the worker can come to know whether or not the part 151 has compatibility before attaching the part 151 to the work machine 1. Therefore, it is possible to prevent the part 151 having no compatibility originally from being attached to the work machine 1. For example, attachment of the part 151 of the work machine 1 of machine type D without compatibility to the work machine 1 of machine type C disposed at the same work site is prevented.

The information controller 110 of the work machine 1 may have part or all of the functions of the management server 180 according to the present modification example 2. For example, it is also possible to employ a configuration in which the information controller 110 disposed in the work machine 1 functions as a determination device that executes determination processing of whether or not the part 151 is an attachable part. In this case, the information controller 110 determines whether or not the part 151 is a part that can be attached to the work machine 1 on the basis of the part number 153 included in the part identification number 87 that is the identification information of the part 151 and a part number registered in advance, and causes the display device 133a as a notification device to notify about the determination result.

### <Modification Example 3>

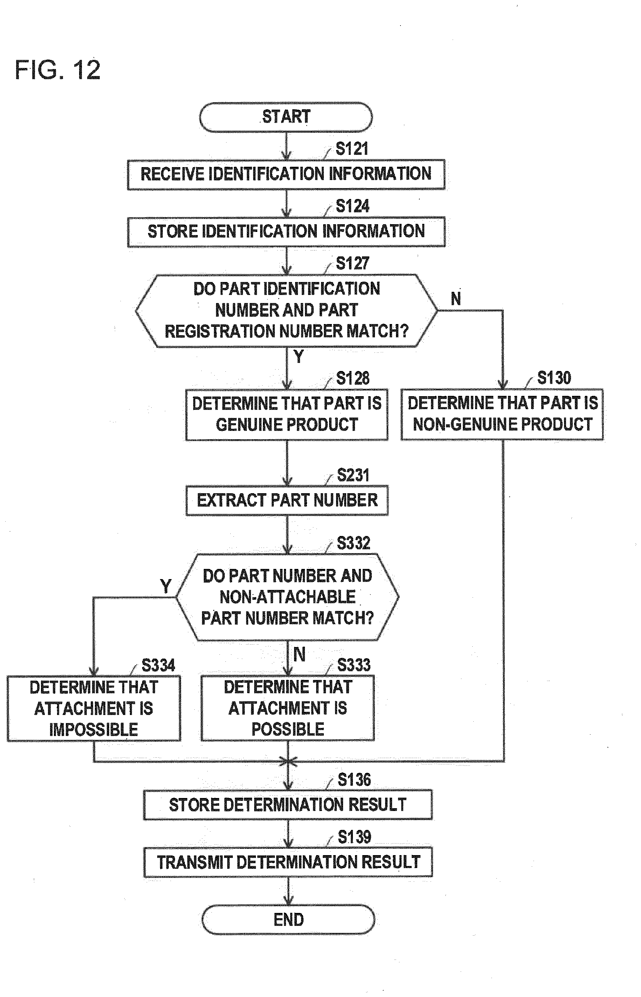

The following processing may be executed in order to prevent the part 151 in which a defect has occurred at a specific timing, on a specific manufacturing line, or the like from being attached to the work machine 1. Through operation of the input device 56 by the manager, the management server 180 stores the part identification number 87 of the same kind of part 151 as the part 151 in which the defect has occurred in the non-volatile memory 183 of the management server 180 as a non-attachable part number. The flow of processing executed by the management server 180 according to the present modification example 3 will be described with reference to FIG. 12. FIG. 12 is a diagram similar to FIG. 11 and the same processing as the processing in FIG. 11 is given the same numeral. In FIG. 12, processing of S332, S333, and S334 is executed instead of the processing of the steps S232, S233, and S234 in the flowchart of FIG. 11.

As illustrated in FIG. 12, in the step S332, the management server 180 determines whether or not the part number 153 extracted in the step S231 and the non-attachable part number match. When it is determined that the part number 153 and the non-attachable part number do not match in the step S332, that is, when it is determined that the non-attachable part number corresponding to the part number 153 is not stored in the non-volatile memory 183, the processing proceeds to the step S333. When it is determined that the part number 153 and the non-attachable part number match in the step S332, the processing proceeds to the step S334.

In the step S333, the management server 180 determines that attachment of the part 151 is possible, and proceeds to the step S136. In the step S334, the management server 180 determines that attachment of the part 151 is impossible, and proceeds to the step S136.

When the affirmative determination has been made in the step S127 and the affirmative determination has been made in the step S332, the management server 180 stores the determination result of the steps S128 and S334 in the non-volatile memory 183 in the step S136. When the affirmative determination has been made in the step S127 and the negative determination has been made in the step S332, the management server 180 stores the determination result of the steps S128 and S333 in the non-volatile memory 183 in the step S136. When the negative determination has been made in the step S127, the management server 180 stores the determination result of the step S130 in the non-volatile memory 183 in the step S136. When the storing processing of the determination result in the step S136 has been completed, the processing proceeds to the step S139. In the step S139, the management server 180 transmits the determination result stored in the step S136 to the work machine 1.

The information controller 110 of the work machine 1 causes the display screen of the display device 133a to display the received determination result. When receiving the determination result representing that attachment of the part 151 is impossible from the management server 180, the information controller 110 causes the display screen of the display device 133a to display an image representing that the part 151 is a non-attachable part. For example, the display device 133a causes the display screen to display a message image such as "the part with part number XXXX can not be attached because being a part in which a defect has occurred."

As above, the parts management system 15 according to the present modification example 3 includes the management server 180 as a determination device that determines whether or not the part 151 is a part attachable to the work machine 1 on the basis of the part number 153 included in the part identification number 87 that is the identification information of the part 151 and the part number stored in the non-volatile memory (storage device) 183 (that is, part number registered in advance) and the display device 133a as a notification device that notifies the worker or the like of the determination result of the management server 180.

In the present modification example 3, it is possible to warn the worker against attaching the part 151 before attachment of the part 151 regarding the part 151 in which a defect has occurred at a specific timing, or on a specific manufacturing line, or the like by executing a trace-back by using the part identification number 87. Therefore, attachment.of the part 151 in which a defect has occurred to the work machine 1 can be prevented.

The information controller 110 of the work machine 1 may have part or all of the functions of the management server 180 according to the present modification example 3. For example, it is also possible to employ a configuration in which the information controller 110 disposed in the work machine 1 functions as a determination device that executes determination processing of whether or not the part 151 is an attachable part. In this case, the information controller 110 determines whether or not the part 151 is a part that can be attached to the work machine 1 on the basis of the part number 153 included in the part identification number 87 that is the identification information of the part 151 and a part number registered in advance, and causes the display device 133a as a notification device to notify about the determination result.

### <Modification Example 4>

In the first embodiment, the example in which the monitoring device 139 is a device that monitors the surroundings of the machine body 4 has been described. However, the present invention is not limited thereto. The monitoring device may be a device that monitors the inside of the machine body 4, that is, the inside of the cab 7. In this case, the monitoring device has a camera that shoots the inside of the cab 7. The camera has a structure in which a CMOS camera and an infrared camera are integrated, for example. The monitoring device monitors an operator who sits on an operation seat of the cab 7 and monitors whether or not an abnormality exists in the operator. For example, the information controller 110 acquires biological information such as the body temperature and the heart rate on the basis of image data acquired from the camera, and determines whether or not the biological information falls within a normal range from a lower-limit threshold to an upper-limit threshold defined in advance. When the biological information is out of the normal range, the information controller 110 causes the display device 133a to display an image representing that. The information controller 110 may read the two-dimensional code 155 by using the camera of this monitoring device, and associate the machine body identification number 81 with the part identification number 87, and output them to the display device 133a and the communication device 141.

### <Modification Example 5>

In the above-described embodiments, the examples in which the exterior package is the packaging bag 152 or 252 have been described. However, the present invention is not limited thereto. The exterior package that houses the part 151 may be a packaging box or may be packaging paper for example.

### <Modification Example 6>

The two-dimensional code 155 may be given information on the weight, size, warehousing date, and so forth of the part 151 besides the part identification number 87.

### <Modification Example 7>

In the above-described embodiment, the example in which the packaging bag 152 is given the two-dimensional code 155 has been described. However, the present invention is not limited thereto. The two-dimensional code 155 may be directly given to the part 151.

### <Modification Example 8>

In the first embodiment, the example in which the information controller 110 and the camera 131 are connected by wire has been described. However, the present invention is not limited thereto. The information controller 110 and the camera 131 may be wirelessly connected by using a communication system such as Wi-Fi (registered trademark) or Bluetooth (registered trademark).

### <ModificationExample 9>

In the first embodiment, description has been made about the example in which the two-dimensional code 155 is shot by the camera 131 and the identification information of the part 151 is acquired from the two-dimensional code 155. However, the present invention is not limited thereto. The information controller 110 may shoot a one-dimensional code such as a barcode by the camera 131 and acquire the identification information of the part 151 from the barcode. The information controller 110 may shoot a three-dimensional code obtained by giving color information and height information to a two-dimensional code by the camera 131, and acquire the identification information of the part 151 from the three-dimensional code. Furthermore, the information controller 110 may acquire the identification information of the part 151 by shooting the part number 153 and the management number 154 as identification information by the camera 131 and extracting the part number 153 and the management number 154 from image data arising from the shooting.

### <Modification Example 10>

In the above-described embodiments, the example in which the input device 133b is the touch sensor of the monitor 133 has been described. However, the present invention is not limited thereto. The input device 133b may be a device such as a switch or lever.

### <Modification Example 11>

In the above-described embodiments, description has been made by taking as an example the case in which the work machine 1 is a crawler type hydraulic excavator. However, the present invention is not limited thereto. The work machine 1 may be a wheel-system hydraulic excavator, wheel loader, dozer, crane, or the like.

Although the embodiments of the present invention have been described above, the above-described embodiments have merely illustrated part of application examples of the present invention and do not intend to limit the technical scope of the present invention to the specific configurations of the above-described embodiments.

### Description of Reference Characters

1, 1B: Work machine
4: Machine body
7: Cab
10: Work device
15: Parts management system
52: Management center
55: Display device
56: Input device
80: Management table
81: Machine body identification number (identification information of the machine body)
82: Machine type
83: Delivery date
84: Operating time
85: Maintenance name
86: Planned date
87: Part identification number (identification information of a part)
88: Part name
89: Previous part identification number
90: Determination result
91: Previous replacement date and time
110: Information controller (controller, determination device, computing device)
113: Non-volatile memory (storage device)
121: Recognition section
122: Display image generating section
123: Decryption section
124: Storing section
125: Communication control section
131: Camera (external recognition sensor)
132: Buzzer
133: Monitor
133a: Display device
133b: Input device
139: Monitoring device
141: Communication device
142: Communication device
151: Part
152: Packaging bag
153: Part number
154: Management number
155: Two-dimensional code (identification information of a part)
156: Hologram film
157: Label
180: Management server (determination device, computing device)
183: Non-volatile memory (storage device)
191: Control section
192: Storing section
210: Information controller (controller, determination device, computing device)
239: Monitoring device
252: Packaging bag (exterior package)
255: RFID tag
260: Tag detection device (external recognition sensor)
261: Magnetic field generating device
262: Receiver
263: Detection controller
290: Magnetic field detectable area
299: RFID tag

## Claims

1. A work machine including
a machine body,
a work device attached to the machine body,
a monitoring device that is attached to the machine body and monitors surroundings of the machine body or inside of the machine body,
a storage device in which identification information of the machine body is stored,
a controller that controls the monitoring device, and
a communication device that executes communication with external, wherein
the controller is configured to
determine whether or not identification information of a part to be attached to the machine body or the work device is included in monitoring information acquired by the monitoring device, and
associate the identification information of the part with the identification information of the machine body, the identification information of the machine body being stored in the storage device, and transmit the identification information of the part and the identification information of the machine body to the external by the communication device when the identification information of the part is included in the monitoring information.

2. The work machine according to claim 1, wherein
the controller is configured to determine whether or not the part is a genuine product on a basis of the identification information of the part and identification information registered in advance, and
the machine body is equipped with a notification device that notifies about a result of the determination.

3. The work machine according to claim 2, wherein
the controller is configured to
acquire information relating to an available time of the part through the monitoring device,
compute a planned date of maintenance of the part on a basis of an operating time of the machine body from acquisition of the identification information of the part and the available time of the part, and
cause the notification device to notify about the planned date.

4. The work machine according to claim 2, wherein
the controller.is configured to
determine whether or not the part is a part attachable to the work machine on a basis of a part number included in the identification information of the part and a part number registered in advance, and
cause the notification device to notify about a result of the determination.

5. A parts management system of a work machine including a monitoring device that monitors surroundings of a machine body of the work machine or inside of the machine body, wherein
the parts management system having
a storage device that acquires, from the work machine, identification information of a part attached to the machine body, the identification information being acquired by the monitoring device, and identification information of the machine body, and stores the identification information of the part and the identification information of the machine body in such a manner as to associate the identification information of the part with the identification information of the machine body.

6. The parts management system according to claim 5, wherein
the parts management system includes
a determination device that determines whether or not the part is a genuine product on a basis of the identification information of the part and identification information registered in advance, and
a notification device that notifies about a determination result of the determination device.

7. The parts management system according to claim 5, wherein
the parts management system includes
a controller configured to acquire information relating to an available time of the part through the monitoring device,
a computing device that computes a planned date of maintenance of the part on a basis of an operating time of the work machine from acquisition of the identification information of the part by the controller and the available time of the part, and
a notification device that notifies about the planned date.

8. The parts management system according to claim 5, wherein
the parts management system includes
a determination device that determines whether or not the part is a part attachable to the work machine on a basis of a part number included in the identification information of the part and a part number registered in advance, and
a notification device that notifies about a determination result of the determination device.
